(19) **Europäisches Patentamt**
**European Patent Office**
**Office européen des brevets**

(11) **EP 4 240 883 B1**

(12) **EUROPEAN PATENT SPECIFICATION**

(45) Date of publication and mention
of the grant of the patent:
**19.03.2025 Bulletin 2025/12**

(21) Application number: **21889716.3**

(22) Date of filing: **04.11.2021**

(51) International Patent Classification (IPC):
*C22C 38/40* (2006.01)    *C22C 38/42* (2006.01)
*C22C 38/46* (2006.01)    *C22C 38/48* (2006.01)
*C22C 38/50* (2006.01)    *B22F 1/052* (2022.01)
*B33Y 70/00* (2020.01)    *B33Y 80/00* (2015.01)
*C22C 33/02* (2006.01)    *C22C 38/02* (2006.01)
*C22C 38/04* (2006.01)    *C22C 38/44* (2006.01)
*C22C 38/52* (2006.01)

(52) Cooperative Patent Classification (CPC):
**C22C 38/02; B22F 1/052; B33Y 70/00; B33Y 80/00;**
**C22C 33/0207; C22C 33/0257; C22C 38/04;**
**C22C 38/42; C22C 38/44; C22C 38/46;**
**C22C 38/48; C22C 38/50; C22C 38/52;** B22F 10/20;
Y02P 10/25

(86) International application number:
**PCT/SE2021/051102**

(87) International publication number:
**WO 2022/098285 (12.05.2022 Gazette 2022/19)**

(54) **MARAGING STEEL**

MARTENSITAUSHÄRTENDER STAHL

ACIER MARAGING

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **05.11.2020 SE 2051286**

(43) Date of publication of application:
**13.09.2023 Bulletin 2023/37**

(73) Proprietor: **Uddeholms AB**
**683 85 Hagfors (SE)**

(72) Inventor: **EJNERMARK, Sebastian**
**663 40 HAMMARÖ (SE)**

(74) Representative: **Aera A/S**
**Niels Hemmingsens Gade 10, 5th Floor**
**1153 Copenhagen K (DK)**

(56) References cited:
EP-A1- 3 467 128    DE-A1- 2 141 026
GB-A- 1 336 678    JP-A- H0 426 738
JP-A- H11 236 642    JP-B1- S5 132 572
JP-B1- S5 132 572    US-A1- 2007 053 784

**Description**

TECHNICAL FIELD

The present invention relates to a new type of maraging steel, which has suitable properties for tools such as hot-work tools and plastic moulding tools and wherein the composition is suitable also for use in an additive manufacturing method.

BACKGROUND ART

The term 'hot-work tools' is applied to a great number of different kinds of tools for the working or forming of metals at comparatively high temperatures, for example tools for die casting, hot-pressing and moulds for forming plastics as well as various other kinds of tools intended for use in work at high temperatures. Conventional hot-work tool steels are developed for strength and hardness during prolonged exposure to elevated temperatures and generally use a substantial amount of carbide forming alloys.

For hot working application it has been common to use different kinds of hot working tool steels, in particular 5 % Cr steels like H11 and H13. Uddeholm DIEVAR® is a premium hot work tool of this type. It is a high-performance chromium-molybdenum-vanadium steel produced by ESR. It contains balanced carbon and vanadium contents as described in WO9950468 A1. Steels of this type utilize particle strengthening by the precipitation of nanometre-sized carbides to hinder dislocation movements, so called secondary hardening steels.

It is also known to use maraging steels for hot work applications. Maraging steels are not hardened by carbon but by the precipitation of intermetallic phases in a highly alloyed matrix of low carbon martensite. Commercial maraging steels often contains 18 % Ni and significant amounts of Mo, Co, Ti and Al. One of the most popular 18 % Ni steels is the Grade 300 Maraging Steel also designated 1.2709. A different class of maraging steels is stainless and embraces 17-7PH, 17-4 PH, 15-5 PH, PH 15-7Mo, PH 14-8Mo and PH 13-8Mo.

Although maraging steel combines ultrahigh strength and ductility, a drawback of maraging steels is that they contain high amounts of expensive alloy elements. A further drawback in many maraging steels is the partial reversion from martensite to austenite that takes place during aging treatment. This type of austenite is referred to as reverted austenite and is to be distinguished from retained austenite, which can also be present in maraging steels after hardening and aging. The microstructural changes that take place during heat treatment and use result in transformational stresses and distortion because austenite and martensite have different densities. The transformation of austenite into martensite causes a volume increase and the transformation of austenite into martensite results in a shrinkage of the tool steel. Accordingly, these unwanted transformations may lead to harmful dimensional changes, which is a difficult problem in high precision moulds, tools and dies.

In addition, the presence of highly reactive elements may impair the polishability due to the formation of hard inclusions like $Al_2O_3$, TiN and VN.

Maraging steel metal powder has been increasingly used in the Additive Manufacturing (AM) since the low carbon content helps prevent cracking during cooling. Due to the high costs for AM powder, recycling of the powder has gained considerable interest. However, the AM-powder will be subjected to oxygen pick-up during processing, because the oxygen content in a Selective Laser Melting (SLM) built chamber generally is in the order of 1000 ppm. Accordingly, the repeated heating of the powder during reuse may result in a substantial oxygen uptake, in particular if the steel contains a high amount of oxygen active elements like Al and Ti.

Document DE2141026 relates to a large steel forging - of high strength, ductility and machinability. The steel contains max. 0.1% C, max. 0.5% Si, max. 0.7% Mn, 5 - 13% Cr, 2 - 10% Ni, 1.5 - 5% Mo and/or W and 3 - 8% Co.

Document EP3467128 relates to an extrusion die made of steel for making a hot working tool, the steel consists of (in weight-%) C 0.01 - 0.08, Si 0.05 - 0.6, Mn 0.1 - 0.8, Cr 3.9 - 6.1, Ni 1.0 - 3.0, Mo 7.0 - 9.0, Co 9.0 - 12.5, Cu 0.2 - 6.5, N 0.01-0.15.

SUMMARY OF THE INVENTION

The present invention aims at obviating the aforementioned disadvantages of previously known materials.

It is a general object of the present invention to provide a new type of universal and economical viable maraging steel, which has improved properties for hot-work and plastic moulding tools.

In particular the present invention is directed to a steel having a high tempering resistance in combination with a high toughness as well as a high dimensional stability. Tempering resistance is the ability of a steel to keep its hardness at an elevated temperature for prolonged time. Toughness is the ability of the steel to absorb energy and plastically deform without fracturing.

A further object is to provide a maraging steel having a good polishability as well as a good dimensional stability.

Another further object is to provide a maraging steel having a low content of reactive elements such that melt atomization of the steel can be performed by use of nitrogen gas and that the powder will have improved properties for recirculation in laser based AM.

The invention is defined in the claims.

DETAILED DESCRIPTION

The importance of the separate elements and their interaction with each other as well as the limitations of the chemical ingredients of the claimed alloy are briefly explained in the following. All percentages for the chemical composition of the steel are given in weight % (wt. %) throughout the description. The amount of the phases is given in volume % (vol. %). Upper and lower limits of the individual elements can be freely combined within the limits set out in the claims.

The importance of the separate elements and their interaction with each other as well as the limitations of the chemical ingredients of the claimed alloy are briefly explained in the following. All percentages for the chemical composition of the steel are given in weight % (wt. %) throughout the description. Upper and lower limits of the individual elements can be freely combined within the limits set out in the claims. The arithmetic precision of the numerical values can be increased by one or two digits for all values given in the present application. Hence, a value reported as e.g. 0.1 % can also be expressed as 0.10 or 0.100 %. The amounts of the microstructural constituents are given in volume % (vol. %).

**Carbon** ($\leq 0.08$ %)

Carbon is an undesired impurity element in maraging steels. The upper limit for carbon is 0.08 %. The upper limit may be set to 0.07, 0.06, 0.05, 0.04, 0.03 or 0.02 %.

**Silicon** (0.1 - 0.9 %)

Silicon is used for deoxidation. Si is also a strong ferrite former. Si is therefore limited to 0.9 %. The upper limit may be 0.8, 0.7, 0.6, 0.5 or 0.4 %. The lower limit is 0.1, or may be 0.2 or 0.3%

**Manganese** ($\leq 2\%$)

Manganese contributes to improving the deoxidation and the hardenability of the steel. The content of Mn is not critical but is limited to 2 %. The upper limit may be set to 1.5, 1.0, 0.6, 0.5 or 0.4 %.

**Chromium** (4.0 - 6.5%)

Chromium is to be present in a content of at least 4.0 % in order to provide a good hardenability and corrosion resistance. If the chromium content is too high, this may lead to the formation of undesired phases such as delta ferrite. The upper limit is therefore 6.5 %. The upper limit may be set to 6.0 or 5.5 %. The lower limit is 4.0, or may be set to 4.1, 4.2, 4.3, 4.4 or 4.5 %.

**Nickel** (2.0 - 4.5 %)

Nickel is an austenite stabilizer, which supresses the formation of delta ferrite. Nickel gives the steel a good hardenability and toughness. Ni promotes the precipitation of Mo as $\mu$-phase. The lower limit may be 2.0, 2.5 or 3 %. The upper limit is 4.5, or may be 4.3, 4.1 or 4.0 %.

**Molybdenum** (4.0 - 6.5 %)

Mo in solid solution is known to have a very favourable effect on the hardenability. Mo is in the present invention required for the precipitation hardening during aging. It would appear that Mo forms the intermetallic $\mu$-phase $(Fe,Ni,Co)_7Mo_6$ during aging. For this reason, the amount of Mo is 4.0 -6.5%. The lower limit may be 4.1, 4.2, 4.3, 4.4 or 4.5 %. The upper limit may be or 6.4, 6.3, 6.2, 6.2, 6.0, 5.9, 5.8, 5.7, 5.6 or 5.5 %.

**Cobalt** (2.0 - 5.5 %)

Cobalt is dissolved in the matrix of the maraging steel and lowers the solubility of molybdenum, thereby Co promotes the precipitation of Mo as $\mu$-phase.

Moreover, Co increases the $M_S$ temperature and the $A_{c1}$ temperature, which results in a reduced risk for the formation of reverted austenite.

**Copper** ($\leq 4$ %)

Cu may be optionally added in order to increase the strength of the steel by precipitation of $\varepsilon$-Cu. The upper limit is 4 % and may be set to 3.5, 3.0, 2.5 or 2.0 %.

**V, Nb,** Ti V, Nb and Ti are strong carbide, nitride and/or oxide formers. The content of these elements should therefore be limited in order to avoid the formation of undesired carbides and nitrides. The maximum amount of each of these elements is therefore 0.1 %. Preferably, these elements are limited to 0.05, 0.03, 0.02, 0.01 or 0.005. In particular, it is preferred to restrict the contents of Nb and Ti to impurity levels.

**Impurity elements**

P and S are the main impurities, which may have a negative effect on the mechanical properties of the steel. P is therefore limited to 0.1, and may be limited to 0.05, 0.04, 0.03 0.02 or 0.01 %. If sulphur is not deliberately added, then the impurity content of S is limited to 0.05, or may be limited to 0.04, 0.003, 0.001, 0.0008, 0.0005 or even 0.0001%. However, in an example not forming part of the present invention, S may be deliberately added in an amount of up to 0.35 % for improving the machinability of the steel. The upper limit of S may be reduced to 0.30, 0.25, 0.15 or 0.10 %.

The inventive steel composition consists of in weight % (wt.%):

| | |
|---|---|
| C | $\leq 0.08$ |
| Si | 0.1 - 0.9 |
| Mn | $\leq 2$ |
| Cr | 4.0 - 6.5 |
| Ni | 2.0 - 4.5 |
| Mo | 4.0 - 6.5 |
| Co | 2.0 - 5.5 |
| Cu | $\leq 4.0$ |
| Nb | $\leq 0.1$ |
| V | $\leq 0.1$ |
| Ti | $\leq 0.1$ |
| Fe and | impurities balance. |

The steel of the present invention is extraordinary stable against the formation of reverted austenite during heating. The martensite-to-austenite transformation temperature (Ac1) for the inventive steel should preferably be higher than 680 °C, which a typical temperature for Al-die casting. The Ac1 can easily be determined in a dilatometer and is taken as the temperature at which the thermal expansion first deviates from linearity. It is preferred that the Ac1 temperature is at least 690 °C, preferably $\geq 700$ °C, more preferably $\geq 710$ °C and most preferably $\geq 720$ °C.

The steel preferably fulfils at least one of the following requirements:

| | |
|---|---|
| C | $\leq 0.07$ |
| Si | 0.2 - 0.8 |
| Mn | < 1 |
| Cr | 4.1 - 6.0 |
| Ni | 2.5 - 4.5 |
| Mo | 4.0 - 6.0 |
| Co | 2.5 - 5.0 |
| Cu | $\leq 3.0$ |
| V | $\leq 0.05$ |
| Nb | $\leq 0.05$ |
| Ti | $\leq 0.05$ |

and/or wherein the steel is in the aged condition and comprises intermetallic precipitates, wherein the at least 50 vol.

% of the precipitates is of the type $(Fe,Ni,Co)_7Mo_6$.

The steel more preferably fulfils at least one of the following compositional requirements:

| | |
|---|---|
| C | ≤ 0.06 |
| Si | 0.2 - 0.7 |
| Mn | ≤ 0.6 |
| Cr | 4.3 - 5.7 |
| Ni | 2.7 - 4.3 |
| Mo | 4.2 - 5.8 |
| Co | 2.7 - 4.7 |
| Cu | ≤ 2.5 |
| V | ≤ 0.03 |
| Nb | ≤ 0.03 |
| Ti | ≤ 0.03 |

and/or wherein the steel is in the aged condition and comprises intermetallic precipitates, wherein the at least 70 vol. % of the precipitates is of the type $(Fe,Ni,Co)_7Mo_6$,

and/or wherein the cleanliness fulfils the following maximum requirements with respect to micro-slag according to ASTM E45-97, Method A:

| A | A | B | B | C | C | D | D |
|---|---|---|---|---|---|---|---|
| T | H | T | H | T | H | T | H |
| 1.0 | 0 | 1.5 | 1.0 | 0 | 0 | 1.5 | 1.0 |

According to a further preferred embodiment the steel fulfils the following requirements:

| | |
|---|---|
| C | ≤ 0.06 |
| Si | 0.3 - 0.6 |
| Mn | ≤ 0.4 |
| Cr | 4.5 - 5.5 |
| Ni | 3.0 - 4.0 |
| Mo | 4.5 - 5.5 |
| Co | 3.0 - 4.5 |
| V | ≤ 0.05 |
| Nb | ≤ 0.05 |
| Ti | ≤ 0.05 |
| Al | ≤ 0.01 |

According to another further preferred embodiment the steel fulfils the following requirements:

| | |
|---|---|
| C | ≤ 0.06 |
| Si | 0.2 - 0.7 |
| Mn | ≤ 0.6 |
| Cr | 4.3 - 5.7 |
| Ni | 2.7 - 4.3 |
| Mo | 4.2 - 5.8 |
| Co | 2.7 - 4.7 |
| V | ≤ 0.03 |
| Ti | ≤ 0.03 |
| Al | ≤ 0.01 |

The inventive alloy may be in the form of a pre-alloyed powder produced by melt atomizing, wherein the powder has a composition as set out above.

The pre-alloyed powder may be produced by gas atomizing, wherein at least 80 % of the powder particles have a size in the range of 5 to 150 $\mu$m and wherein the powder fulfils at least one of the following requirements:

| Powder size distribution (in $\mu$m): | $5 \leq$ | D10 | $\leq 35$ |
|---|---|---|---|
| | $20 \leq$ | D50 | $\leq 55$ |
| | | D90 | $\leq 80$ |
| Mean sphericity, SPHT | $\geq 0.85$ | | |
| Mean aspect ratio, b/l | $\geq 0.85$ | | |

wherein the powder size distribution is measured with a Camsizer according to ISO 4497, wherein SPHT = $4\pi A/P^2$, where A is the measured area covered by a particle projection and P is the measured perimeter/circumference of a particle projection and the sphericity (SPHT) is measured by a Camsizer in accordance with ISO 9276-6, and wherein b is the shortest width of the particle projection and 1 is the longest diameter.

The pre-alloyed powder particles preferably have a size distribution, wherein at least 90 % of the powder particles have a size in the range of 10 to 100 $\mu$m and wherein the powder fulfils at least one of the following requirements:

| Powder size distribution (in $\mu$m): | $10 \leq$ | D10 | $\leq 30$ |
|---|---|---|---|
| | $25 \leq$ | D50 | $\leq 45$ |
| | | D90 | $\leq 70$ |
| Mean sphericity, SPHT | $\geq 0.90$ | | |
| Mean aspect ratio, b/1 | $\geq 0.88$ | | |

wherein the powder size distribution is measured with a Camsizer according to ISO 4497, wherein SPHT = $4\pi A/P^2$, where A is the measured area covered by a particle projection and P is the measured perimeter/circumference of a particle projection and the sphericity (SPHT) is measured by a Camsizer in accordance with ISO 9276-6, and wherein b is the shortest width of the particle projection and 1 is the longest diameter.

The invention also embraces an article formed by an additive manufacturing method, wherein the article comprises an alloy of the inventive alloy.

The inventive alloy may be used for the production of hot working tools, plastic moulding tools and for small dies and any other tool. These products may be produced by any suitable method. A preferred production method is PM involving HIP or AM. In particular, the steel powder is suitable for Selective Laser Melting involving recirculation of the powder, because of the low reactivity of the alloy powder with oxygen and nitrogen.

The alloys of the present invention can be produced by Powder Metallurgy (PM).

PM powders can be produced by conventional gas- or water- atomization of pre-alloyed steel.

If the powder shall be used for AM, then gas-atomization is the preferred atomization method, because it is important to use a technique, that produces powder particles having a high degree of roundness and a low amount of satellites. In particular, the close-coupled gas atomization method can be used for this purpose.

The maximum size of the powder particles for AM is 150 $\mu$m, and the preferred size range is 10 - 100 $\mu$m with a mean size of about 25 - 45 $\mu$m.

The AM methods of prime interest are Liquid Metal Deposition (LMD), Selective Laser Melting (SLM) and Electron Beam (EB) melting. The powder characteristics are also of importance for AM. The powder size distribution measured with a Camsizer according to ISO 4497 should fulfil the following requirements (in $\mu$m):

$$5 \ \leq D10 \leq 35$$

$$20 \leq D50 \leq 55$$

$$D90 \leq 80$$

Preferably, the powder should fulfil the following size requirements (in $\mu$m):

$$10 \leq D10 \leq 30$$

$$25 \le D50 \le 45$$

$$D90 \le 70$$

Even more preferred is that the coarse size fraction D90 is limited to $\le 60$ $\mu$m or even $\le 55$ $\mu$m.

The sphericity of the powder should be high. The sphericity (SPHT) can be measured by a Camsizer and is defined in ISO 9276-6. SPHT = $4\pi A/P^2$, where A is the measured area covered by a particle projection and P is the measured perimeter/circumference of a particle projection. The mean SPHT should be at least 0.80 and can preferably be at least 0.85, 0.90, 0.91, 0.92 0.93, 0.94 or even 0.95. In addition, not more than 5 % of the particles should have a SPHT $\le$ 0.70. Preferably said value should be less than 0.70, 0.65, 0.55 or even 0.50. In addition to SPHT, the aspect ratio can be used in the classifying of the powder particles. The aspect ratio is defined as b/l, wherein b is the shortest width of the particle projection and l is the longest diameter. The mean aspect ratio should preferably be at least 0.85 or more preferably 0. 86, 0.87, 0.88, 0.89, or 0.90.

EXAMPLE 1

In this example one inventive alloy is compared to the premium steel Uddeholm Dievar.®

The alloys had the following nominal compositions (in wt. %):

|     | Inventive | Uddeholm Dievar® |
|-----|-----------|------------------|
| C   | 0.03      | 0.36             |
| Si  | 0.43      | 0.20             |
| Mn  | 0.03      | 0.5              |
| Cr  | 5.25      | 5                |
| Ni  | 3.43      | -                |
| Mo  | 5.51      | 2.3              |
| V   | 0.07      | 0.55             |
| Co  | 3.82      | -                |
| Cu  | 0.04      | -                |

balance iron and impurities.

The inventive steel is formed by gas atomizing and HIPing. After cooling to room temperature with a time of 600 s in the temperature interval 800 - 500 °C ($t_{8/5}$ = 600 s), the steel was subjected to tempering twice for three hours at 605 °C, which resulted in a hardness of 45 HRC.

The comparative steel was conventionally produced by ingot casting followed by ESR. The remelted steel was subjected to austenitization at 1020 °C in a vacuum furnace followed by gas quenching with a time of 600 s in the interval 800 - 500 °C ($t_{8/5}$ = 600s). After cooling to room temperature, the comparative steel was subjected to tempering twice for two hours (2x2) at 615 °C in order to obtain a hardness of 45 HRC. The tempering resistance of the alloys was thereafter examined at a temperature of 600 °C. The results are given in Table 1.

Table 1. Tempering resistance at 600 °C. Hardness (HRC) as a function of time.

| Time (h) | Inventive steel | Uddeholm Dievar® |
|----------|-----------------|------------------|
| 0        | 45              | 45               |
| 100      | 42              | 32               |

In addition, the toughness of the steels was examined after tempering and it was found that the inventive steel had a Charpy-V toughness of 25 J, whereas the comparative steel had a Charpy-V toughness of 22 J. Accordingly, it can be seen that the inventive steel had a much higher tempering resistance than the comparative steel.

The microstructure of the steels was examined after aging and it was found that the precipitate responsible for the hardening in the inventive steel is $(Fe,Ni,Co)_7Mo_6$, i.e. the intermetallic $\mu$-phase. The precipitation Module (TC-Prisma, Thermo Calc Version 2021b) was used as computational tool for simulating the precipitation process in the inventive steel. The result of the precipitation calculation for the inventive steel used in this example indicated that the size of the intermetallic $\mu$-phase would be about 20 nm after 10 hours and that the amount of the $\mu$-phase would be slightly less than 5 vol. %.

EXAMPLE 2

In this example one inventive alloy is compared to the Grade 300 Maraging Steel (1.2709).

The alloys had the following nominal compositions (in wt. %):

|  | Inventive | 1.2709 |
|---|---|---|
| C | 0.03 | 0.005 |
| Si | 0.43 | 0.04 |
| Mn | 0.03 | 0.05 |
| Cr | 5.25 | 0.02 |
| Ni | 3.43 | 18.1 |
| Mo | 5.51 | 5.1 |
| V | 0.07 | 0.03 |
| Co | 3.82 | 8.8 |
| Cu | 0.04 | 0.01 |
| Ti | - | 0.95 |

balance iron and impurities.

Gas atomized powders of these alloys were subjected to selective laser melting (SLM) in a EOS M290 system.

It was found that the inventive steel was free from retained austenite (< 2 vol. %) in the as-built condition, whereas the comparative steel contained 11 vol. % retained austenite. The amount of retained austenite was determined by X-ray diffraction according to the standard ASTM E975-13.

The propensity to form reverted austenite during aging was examined by holding the steels at an aging temperature of 540 °C for 1 hour. The examination revealed that the inventive steel did not form any reverted austenite, whereas the amount of austenite increased to 17 vol. % in the comparative steel. Accordingly, the aging was performed above the martensite-to-austenite transformation temperature (Ac1) for the comparative steel 1.2709. Therefore, the thermal expansion of the steel 1.2709 will be affected by the martensite-to-austenite transformation during reheating.

The absence of a martensite-to-austenite transformation in the inventive steel would appear to be caused by an austenite transformation starting temperature that is higher than the aging temperature. This was verified by an examination in a dilatometer, which revealed an Ac1 temperature of 730 °C and an Ac3 temperature of 925 °C for the inventive steel. Accordingly, no reverted austenite will be formed during reheating up to the Ac1 temperature. It follows therefrom that the inventive steel may be used for die casting of aluminium, which generally is performed with a melt temperature of about 680 °C.

The microstructure of the steels was examined after aging and it was found that the precipitate responsible for the hardening in the inventive steel is $(Fe,Ni,Co)_7Mo_6$, i.e. the intermetallic $\mu$-phase.

As expected, the precipitate responsible for the hardening in the comparative steel 1.2709 was as expected $(Fe,Ni,Co)_3(Ti,Mo)$ and only a minor amount of the $\mu$-phase was found.

EXAMPLE 3

The sensitivity to the formation of non-metallic inclusions when subjected to an oxygen containing atmosphere was qualitatively examined. The inventive steel with the same composition as in example 2 was compared to the steel Uddeholm CORRAX®. The nominal composition of the comparative steel is 0.03 % C, 0.3 % Si, 0.3 % Mn, 12.0 % Cr, 9.2 % Ni, 1.4 % Mo and 1.6 % Al.

Both steels were subjected to melting under protective argon atmosphere in a HF-furnace followed by casting the melts in an inclined copper chute in open air.

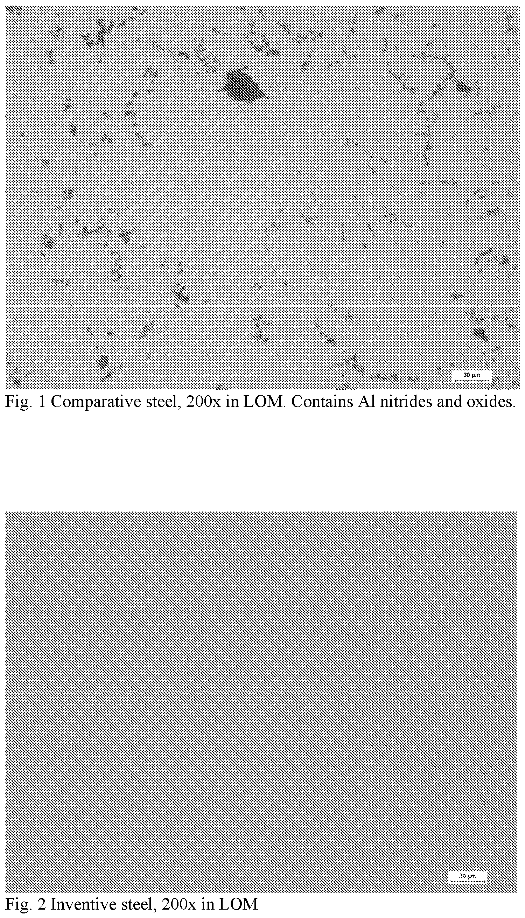

Identical samples were taken and examined in a LOM at a magnification of 200x. The results of the examination are shown in Fig. 1 and Fig. 2 and a comparison reveals that the inventive steel is much less sensitive to oxygen than the comparative steel.

INDUSTRIAL APPLICABILITY

The alloy of the present invention is useful in a wide range of applications. In particular, the alloy is useful in tools and dies for hot working and plastic moulding as well as for AM-applications.

**Claims**

1. A steel suitable for hot-work tools, the steel consists of in weight % (wt.%):

| | |
|---|---|
| C | $\leq 0.08$ |
| Si | 0.1 - 0.9 |
| Mn | $\leq 2$ |
| Cr | 4.0 - 6.5 |
| Ni | 2.0 - 4.5 |
| Mo | 4.0 - 6.5 |
| Co | 2.0 - 5.5 |
| Cu | $\leq 4.0$ |
| Nb | $\leq 0.1$ |
| V | $\leq 0.1$ |
| Ti | $\leq 0.1$ |

Fe and impurities balance, wherein P and S are the main impurities whereby P is limited to 0.1% and S is limited to 0.05%.

2. A steel according to claim 1, which fulfils at least one of the following requirements:

| | |
|---|---|
| C | $\leq 0.07$ |
| Si | 0.2 - 0.8 |
| Mn | $\leq 1$ |
| Cr | 4.1 - 6.0 |
| Ni | 2.5 - 4.5 |
| Mo | 4.0 - 6.0 |
| Co | 2.5 - 5.0 |
| Cu | $\leq 3.0$ |
| V | $\leq 0.05$ |
| Nb | $\leq 0.05$ |
| Ti | $\leq 0.05$ |

and/or wherein the martensite-to-austenite transformation temperature, Ac1, is higher than 680 °C,
and/or wherein the steel is in the aged condition and comprises intermetallic precipitates, wherein the at least 50 vol. % of the precipitates is of the type $(Fe,Ni,Co)_7Mo_6$.

3. A steel according to claim 1 or 2, which fulfils at least one of the following compositional requirements:

| | |
|---|---|
| C | $\leq 0.06$ |
| Si | 0.2 - 0.7 |
| Mn | $\leq 0.6$ |
| Cr | 4.3 - 5.7 |
| Ni | 2.7 - 4.3 |
| Mo | 4.2 - 5.8 |
| Co | 2.7 - 4.7 |
| Cu | $\leq 2.5$ |
| V | $\leq 0.03$ |
| Nb | $\leq 0.03$ |
| Ti | $\leq 0.03$ |

and/or wherein the martensite-to-austenite transformation temperature, Ac1, is higher than 700 °C,

and/or wherein the steel is in the aged condition and comprises intermetallic precipitates, wherein the at least 70 vol. % of the precipitates is of the type $(Fe,Ni,Co)_7Mo_6$,
and/or wherein the cleanliness fulfils the following maximum requirements with respect to micro-slag according to ASTM E45-97, Method A:

| A | A | B | B | C | C | D | D |
|---|---|---|---|---|---|---|---|
| T | H | T | H | T | H | T | H |
| 1.0 | 0 | 1.5 | 1.0 | 0 | 0 | 1.5 | 1.0 |

4.  A steel according to claim 1 or 2, which fulfils the following requirements:

| | |
|---|---|
| C | $\leq 0.06$ |
| Si | 0.3 - 0.6 |
| Mn | $\leq 0.4$ |
| Cr | 4.5 - 5.5 |
| Ni | 3.0 - 4.0 |
| Mo | 4.5 - 5.5 |
| Co | 3.0 - 4.5 |
| V | $\leq 0.05$ |
| Nb | $\leq 0.05$ |
| Ti | $\leq 0.05$ |
| Al | $\leq 0.01$ |

and, optionally, wherein the martensite-to-austenite transformation temperature, Ac1, is higher than 710 °C.

5.  A steel according to claim 1 or 2, which fulfils the following requirements:

| | |
|---|---|
| C | $\leq 0.06$ |
| Si | 0.2 - 0.7 |
| Mn | $\leq 0.6$ |
| Cr | 4.3 - 5.7 |
| Ni | 2.7 - 4.3 |
| Mo | 4.2 - 5.8 |
| Co | 2.7 - 4.7 |
| V | $\leq 0.03$ |
| Ti | $\leq 0.03$ |
| Al | $\leq 0.01$ |

and, optionally, wherein the martensite-to-austenite transformation temperature, Ac1, is higher than 720 °C.

6.  A pre-alloyed powder produced by melt atomizing, wherein the powder has a composition as defined in any of claims 1-5.

7.  A pre-alloyed powder according to claim 6, wherein the powder is produced by gas atomizing, at least 80 % of the powder particles have a size in the range of 5 to 150 $\mu$m the and wherein the powder fulfils at least one of the following requirements:

| Powder size distribution (in $\mu$m): | $5 \leq$ | D10 | $\leq 35$ |
|---|---|---|---|
| | $20 \leq$ | D50 | $\leq 55$ |
| | | D90 | $\leq 80$ |

(continued)

| Mean sphericity, SPHT | $\geq 0.85$ |
| Mean aspect ratio, b/l | $\geq 0.85$ |

wherein the powder size distribution is measured with a Camsizer according to ISO 4497, wherein SPHT = $4\pi A/P^2$, where A is the measured area covered by a particle projection and P is the measured perimeter/circumference of a particle projection and the sphericity (SPHT) is measured by a Camsizer in accordance with ISO 9276-6, and wherein b is the shortest width of the particle projection and l is the longest diameter.

8. A pre-alloyed powder as defined in claim 6, wherein at least 90 % of the powder particles have a size in the range of 10 to 100 $\mu$m and wherein the powder fulfils at least one of the following requirements:

| Powder size distribution (in $\mu$m): | $10 \leq$ | D10 | $\leq 30$ |
| | $25 \leq$ | D50 | $\leq 45$ |
| | | D90 | $\leq 70$ |
| Mean sphericity, SPHT | $\geq 0.90$ | | |
| Mean aspect ratio, b/l | $\geq 0.88$ | | |

wherein the powder size distribution is measured with a Camsizer according to ISO 4497, wherein SPHT = $4\pi A/P^2$, where A is the measured area covered by a particle projection and P is the measured perimeter/circumference of a particle projection and the sphericity (SPHT) is measured by a Camsizer in accordance with ISO 9276-6, and wherein b is the shortest width of the particle projection and l is the longest diameter.

9. An article formed by liquid metal deposition, selective laser melting or electron beam melting, wherein the article comprises an alloy as defined in any of claim 1- 5.

10. Use of an alloy as defined in any of claims 1-5 for the production of tools and dies for hot working and plastic moulding.

**Patentansprüche**

1. Stahl, der für Warmarbeitswerkzeuge geeignet ist, wobei der Stahl besteht aus in Gewichts-% (Gew.-%):

$$C \leq 0,08$$

$$Si\ 0,1 - 0,9$$

$$Mn \leq 2$$

$$Cr\ 4,0 - 6,5$$

$$Ni\ 2,0 - 4,5$$

$$Mo\ 4,0 - 6,5$$

$$Co\ 2,0 - 5,5$$

$$Cu \leq 4,0$$

$$Nb \leq 0,1$$

$$V \leq 0,1$$

$$Ti \leq 0,1$$

Fe und Rest Verunreinigungen, wobei P und S die Hauptverunreinigungen sind, wobei P auf 0,1 % und S auf 0,05 % begrenzt ist.

2. Stahl nach Anspruch 1, der mindestens eine der folgenden Anforderungen erfüllt:

$$C \leq 0,07$$

$$Si \ 0,2 - 0,8$$

$$Mn \leq 1$$

$$Cr \ 4,1 - 6,0$$

$$Ni \ 2,5 - 4,5$$

$$Mo \ 4,0 - 6,0$$

$$Co \ 2,5 - 5,0$$

$$Cu \leq 3,0$$

$$V \leq 0,05$$

$$Nb \leq 0,05$$

$$Ti \leq 0,05$$

und / oder wobei die Martensit-Austenit-Umwandlungstemperatur Ac1 höher als 680 °C ist,
und / oder wobei der Stahl in dem gealterten Zustand vorliegt und intermetallische Ausscheidungen umfasst, wobei mindestens 50 Vol.-% der Ausscheidungen von dem Typ $(Fe,Ni,Co)_7Mo_6$ sind.

3. Stahl nach Anspruch 1 oder 2, der mindestens eine der folgenden Zusammensetzungsanforderungen erfüllt:

$$C \leq 0,06$$

$$Si \ 0,2 - 0,7$$

$$Mn \leq 0,6$$

$$Cr\ 4,3 - 5,7$$

$$Ni\ 2,7 - 4,3$$

$$Mo\ 4,2 - 5,8$$

$$Co\ 2,7 - 4,7$$

$$Cu \leq 2,5$$

$$V \leq 0,03$$

$$Nb \leq 0,03$$

$$Ti \leq 0,03$$

und / oder wobei die Martensit-Austenit-Umwandlungstemperatur Ac1 höher als 700 °C ist,
und / oder wobei der Stahl in dem gealterten Zustand vorliegt und intermetallische Ausscheidungen umfasst, wobei mindestens 70 Vol.-% der Ausscheidungen von dem Typ $(Fe,Ni,Co)_7Mo_6$ sind,
und / oder wobei die Reinheit die folgenden maximalen Anforderungen in Bezug auf Mikroschlacken nach ASTM E45-97, Methode A, erfüllt:

| A | A | B | B | C | C | D | D |
|---|---|---|---|---|---|---|---|
| T | H | T | H | T | H | T | H |
| 1,0 | 0 | 1,5 | 1,0 | 0 | 0 | 1,5 | 1,0 |

4. Stahl nach Anspruch 1 oder 2, der die folgenden Anforderungen erfüllt:

$$C \leq 0,06$$

$$Si\ 0,3 - 0,6$$

$$Mn \leq 0,4$$

$$Cr\ 4,5 - 5,5$$

$$Ni\ 3,0 - 4,0$$

$$Mo\ 4,5 - 5,5$$

$$Co\ 3,0 - 4,5$$

$$V \leq 0,05$$

$$Nb \leq 0,05$$

$$Ti \leq 0,05$$

$$Al \leq 0,01$$

und optional, wobei die Martensit-Austenit-Umwandlungstemperatur Ac1 höher als 710 °C ist.

5. Stahl nach Anspruch 1 oder 2, der die folgenden Anforderungen erfüllt:

$$C \leq 0,06$$

$$Si \leq 0,2 - 0,7$$

$$Mn \leq 0,6$$

$$Cr\ 4,3 - 5,7$$

$$Ni\ 2,7 - 4,3$$

$$Mo\ 4,2 - 5,8$$

$$Co\ 2,7 - 4,7$$

$$V \leq 0,03$$

$$Ti \leq 0,03$$

$$Al \leq 0,01$$

und optional, wobei die Martensit-Austenit-Umwandlungstemperatur Ac1 höher als 720 °C ist.

6. Vorlegiertes Pulver, hergestellt durch Schmelzzerstäubung, wobei das Pulver eine Zusammensetzung nach einem der Ansprüche 1 - 5 aufweist.

7. Vorlegiertes Pulver nach Anspruch 6, wobei das Pulver durch Gaszerstäubung hergestellt wird, mindestens 80 % der Pulverteilchen eine Größe in dem Bereich von 5 - 150 $\mu$m aufweisen und wobei das Pulver mindestens eine der folgenden Anforderungen erfüllt:

| Pulvergrößenverteilung (in $\mu$m): | $5 \leq$ | D10 | $\leq 35$ |
| | $20 \leq$ | D50 | $\leq 55$ |
| | | D90 | $\leq 80$ |
| Mittlere Sphärizität, SPHT | $\geq 0,85$ | | |
| Mittleres Seitenverhältnis, b/1 | $\geq 0,85$ | | |

wobei die Pulvergrößenverteilung mit einem Camsizer nach ISO 4497 gemessen wird, wobei SPHT = $4\pi A/P^2$ ist, wobei A die gemessene Fläche ist, die von einer Teilchenprojektion bedeckt wird, und P der gemessene Perimeter / Umfang einer Teilchenprojektion ist und die Sphärizität (SPHT) durch einen Camsizer nach ISO 9276-6 gemessen wird, und wobei b die kürzeste Breite der Teilchenprojektion und 1 der längste Durchmesser ist.

8. Vorlegiertes Pulver nach Anspruch 6, wobei mindestens 90 % der Pulverteilchen eine Größe in dem Bereich von 10 bis 100 $\mu$m aufweisen und wobei das Pulver mindestens eine der folgenden Anforderungen erfüllt:

| | | | |
|---|---|---|---|
| Pulvergrößenverteilung (in $\mu$m): | $10 \leq$ | D10 | $\leq 30$ |
| | $25 \leq$ | D50 | $\leq 45$ |
| | | D90 | $\leq 70$ |
| Mittlere Sphärizität, SPHT | $\geq 0,90$ | | |
| Mittleres Seitenverhältnis, b/l | $\geq 0,88$ | | |

wobei die Pulvergrößenverteilung mit einem Camsizer nach ISO 4497 gemessen wird, wobei SPHT = $4\pi A/P^2$ ist, wobei A die gemessene Fläche ist, die von einer Teilchenprojektion bedeckt wird, und P der gemessene Perimeter / Umfang einer Teilchenprojektion ist und die Sphärizität (SPHT) durch einen Camsizer nach ISO 9276-6 gemessen wird, und wobei b die kürzeste Breite der Teilchenprojektion und 1 der längste Durchmesser ist.

9. Artikel, der durch Flüssigmetallabscheidung, selektives Laserschmelzen oder Elektronenstrahlschmelzen geformt wird, wobei der Artikel eine wie in einem der Ansprüche 1 - 5 Legierung umfasst.

10. Verwendung einer wie in einem der Ansprüche 1 - 5 definierten Legierung für die Herstellung von Werkzeugen und Formen für Warmumformung und Kunststoffformen.


**Revendications**

1. Un acier adapté aux outils de travail à chaud, l'acier se compose, en % en poids (% pds) de :

| | |
|---|---|
| C | $\leq 0,8$ |
| Si | $0,1 - 0,9$ |
| Mn | $\leq 2$ |
| Cr | $4,0 - 6,5$ |
| Ni | $2,0 - 4,5$ |
| Mo | $4,0 - 6,5$ |
| Co | $2,0 - 5,5$ |
| Cu | $\leq 4,0$ |
| Nb | $\leq 0,1$ |
| V | $\leq 0,1$ |

$$\text{Ti} \qquad \leq 0,1$$

le reste en Fe et impuretés, P et S étant les principales impuretés, P étant limité à 0,1 % et S à 0,05 %.

2. Un acier selon la revendication 1, qui satisfait au moins à l'une des exigences suivantes :

$$\text{C} \qquad \leq 0,07$$

$$\text{Si} \qquad 0,2 - 0,8$$

$$\text{Mn} \qquad \leq 1$$

$$\text{Cr} \qquad 4,1 - 6,0$$

$$\text{Ni} \qquad 2,5 - 4,5$$

$$\text{Mo} \qquad 4,0 - 6,0$$

$$\text{Co} \qquad 2,5 - 5,0$$

$$\text{Cu} \qquad \leq 3,0$$

$$\text{V} \qquad \leq 0,05$$

$$\text{Nb} \qquad \leq 0,05$$

$$\text{Ti} \qquad \leq 0,05$$

et/ou dans lequel la température de transformation martensite-austénite, Ac1, est supérieure à 680°C, et/ou dans lequel l'acier est à l'état vieilli et comprend des précipités intermétalliques, ledit pourcentage d'au moins 50 % en volume des précipités étant du type $(Fe,Ni,Co)_7Mo_6$.

3. Un acier selon la revendication 1 ou la revendication 2, qui satisfait au moins à l'une des exigences de composition suivantes :

$$\text{C} \qquad \leq 0,06$$

$$\text{Si} \qquad 0,2 - 0,7$$

$$\text{Mn} \qquad \leq 0,6$$

$$\text{Cr} \qquad 4,3 - 5,7$$

$$\text{Ni} \qquad 2,7 - 4,3$$

| | |
|---|---|
| Mo | 4,2 - 5,8 |
| Co | 2,7 - 4,7 |
| Cu | $\leq 2,5$ |
| V | $\leq 0,03$ |
| Nb | $\leq 0,03$ |
| Ti | $\leq 0,03$ |

et/ou dans lequel la température de transformation martensite-austénite, Ac1, est supérieure à 700°C,
et/ou dans lequel l'acier est à l'état vieilli et comprend des précipités intermétalliques, le pourcentage d'au moins 70 % en volume des précipités étant de type $(Fe,Ni,Co)_7Mo_6$,
et/ou dans lequel la propreté satisfait aux exigences maximales suivantes en ce qui concerne les micro-laitiers selon la norme ASTM E45-97, méthode A :

| A | A | B | B | C | C | D | D |
|---|---|---|---|---|---|---|---|
| T | H | T | H | T | H | T | H |
| 1.0 | 0 | 1,5 | 1.0 | 0 | 0 | 1.5 | 1.0 |

4. Un acier selon la revendication 1 ou la revendication 2, qui satisfait aux exigences suivantes :

| | |
|---|---|
| C | $\leq 0,06$ |
| Si | 0,3 - 0,6 |
| Mn | $\leq 0,4$ |
| Cr | 4,5 - 5,5 |
| Ni | 3,0 - 4,0 |
| Mo | 4,5 - 5,5 |
| Co | 3,0 - 4,5 |
| V | $\leq 0,05$ |
| Nb | $\leq 0,05$ |
| Ti | $\leq 0,05$ |

$$Al \qquad \leq 0,01$$

et, optionnellement, dans lequel la température de transformation martensite-austénite, Ac1, est supérieure à 710°C.

**5.** Un acier selon la revendication 1 ou la revendication 2, qui satisfait aux exigences suivantes :

$$C \qquad \leq 0,06$$

$$Si \qquad 0,2 \text{ - } 0,7$$

$$Mn \qquad \leq 0,6$$

$$Cr \qquad 4,3 \text{ - } 5,7$$

$$Ni \qquad 2,7 \text{ - } 4,3$$

$$Mo \qquad 4,2 \text{ - } 5,8$$

$$Co \qquad 2,7 \text{ - } 4,7$$

$$V \qquad \leq 0,03$$

$$Ti \qquad \leq 0,03$$

$$Al \qquad \leq 0,01$$

et, optionnellement, dans lequel la température de transformation martensite-austénite, Ac1, est supérieure à 720°C.

**6.** Une poudre pré-alliée produite par atomisation à l'état fondu, la poudre ayant une composition telle que définie dans l'une quelconque des revendications 1 à 5.

**7.** Une poudre pré-alliée selon la revendication 6, la poudre étant produite par atomisation au gaz, au moins 80 % des particules de poudre ayant une taille comprise entre 5 et 150 $\mu$m et la poudre satisfaisant au moins une des exigences suivantes :

| Distribution granulométrique de la poudre (en $\mu$m) : | $5 \leq$ | D10 | $\leq 35$ |
|---|---|---|---|
| | $20 \leq$ | D50 | $\leq 55$ |
| | | D90 | $\leq 80$ |
| Sphéricité moyenne, SPHT | $\geq 0,85$ | | |
| Rapport d'aspect moyen, b/l | $\geq 0,85$ | | |

la distribution granulométrique de la poudre étant mesurée avec un Camsizer selon la norme ISO 4497, SPHT = $4\pi A/P^2$, A étant la surface mesurée couverte par une projection de particules et P étant le périmètre/la circonférence mesuré d'une projection de particules et la sphéricité (SPHT) étant mesurée par un Camsizer conformément à la norme ISO 9276-6, et b étant la largeur la plus courte de la projection de particules et 1 est le diamètre le plus long.

**8.** Une poudre pré-alliée telle que définie dans la revendication 6, dans laquelle au moins 90 % des particules de poudre ont une taille comprise entre 10 et 100 $\mu$m et la poudre satisfaisant au moins à l'une des exigences suivantes :

| Distribution granulométrique de la poudre (en $\mu$m) : | $10 \leq$ | D10 | $\leq 30$ |
| --- | --- | --- | --- |
| | $25 \leq$ | D50 | $\leq 45$ |
| | | D90 | $\leq 70$ |

| Sphéricité moyenne, SPHT | $\geq 0{,}90$ |
| --- | --- |
| Rapport d'aspect moyen, b/l | $\geq 0{,}88$ |

la distribution granulométrique de la poudre étant mesurée avec un Camsizer conformément à la norme ISO 4497, SPHT = $4\pi A/P^2$, A étant la surface mesurée couverte par une projection de particule et P étant le périmètre/la circonférence mesuré d'une projection de particule et la sphéricité (SPHT) étant mesurée par un Camsizer conformément à la norme ISO 9276- 6, et b étant la largeur la plus courte de la projection de particules et 1 étant le diamètre le plus long.

9. Un article formé par dépôt de métal liquide, fusion laser sélective ou fusion par faisceau d'électrons, l'article comprenant un alliage tel que défini dans l'une quelconque des revendications 1 à 5.

10. Utilisation d'un alliage tel que défini dans l'une quelconque des revendications 1 à 5 pour la production d'outils et de matrices pour le travail à chaud et le moulage de plastique.

Fig. 1 Comparative steel, 200x in LOM. Contains Al nitrides and oxides.

Fig. 2 Inventive steel, 200x in LOM

**REFERENCES CITED IN THE DESCRIPTION**

**Patent documents cited in the description**

- WO 9950468 A1
- DE 2141026
- EP 3467128 A